Europäisches Patentamt

European Patent Office

Office européen des brevets

(11) Veröffentlichungsnummer: **0 213 560**
**A1**

(12) # EUROPÄISCHE PATENTANMELDUNG

(21) Anmeldenummer: 86111591.3

(22) Anmeldetag: 21.08.86

(51) Int. Cl.4: **F21Q 3/00 , H01J 61/52**

(30) Priorität: 27.08.85 DE 3530563

(43) Veröffentlichungstag der Anmeldung:
**11.03.87 Patentblatt 87/11**

(84) Benannte Vertragsstaaten:
**AT BE CH DE FR LI NL**

(71) Anmelder: **Siemens Aktiengesellschaft Berlin und München**
**Wittelsbacherplatz 2**
**D-8000 München 2(DE)**

(72) Erfinder: **Krautwald, Herbert, Dipl.-Ing. (FH)**
**Klobensteiner Strasse 35**
**D-8000 München 90(DE)**

(54) **Lichtsignalgeber.**

(57) Die Erfindung bezieht sich auf einen Lichtsignalgeber, de zumindest aus einer Einzelkammer gebildet ist, die in einem Gehäuse einen Reflektor, eine Lampe und eine Streuscheibe aufweist. Erfindungsgemäß ist die Lampe von einer temperaturkompensierten kompakten Leuchtstofflampe gebildet, die im Stand-by-Betrieb betrieben wird. Zur Temperaturkompensation ist ein Heizelement, beispielsweise ein Kaltleiter, vorgesehen, das in Abhängigkeit der Umgebungstemperatur der Leuchtstofflampe geschaltet wird. Dabei kann das Heizelement unmittelbar an der Röhre oder zwischen den Röhren der Leuchtstofflampe oder auf dem Reflektor angeordnet sein. Ein dünnwandiger transparenter weißer oder farbiger Zylinder kann über die Leuchtstofflampe angebracht werden. Ferner kann zusätzlich die Rückseite des Reflektors eine wärmeisolierende Schicht aufweisen.

FIG 1

EP 0 213 560 A1

Xerox Copy Centre

## Lichtsignalgeber

Die Erfindung bezieht sich auf einen Lichtsignalgeber, der zumindest aus einer Einzelkammer gebildet ist, die in einem Gehäuse einen Reflektor, eine Lampe und eine Streuscheibe aufweist.

Zur Steuerung und Regelung des Straßenverkehrs werden Lichtsignalgeber benützt. Die Lichtsignalgeber geben dem Verkehrsteilnehmer über farbige Lichtsignale optische Informationen. Dabei soll der Lichtsignalgeber auffällige und gut sichtbare Farbsignale abgeben. Diese optischen farbigen Lichtsignale erzeugt im allgemeinen eine Glühlampe, die im Gehäuse auf einem Reflektor hinter der Streuscheibe angeordnet ist. Dabei emittiert die glühende Wolframwendel einen Lichtstrom. Die von dem Reflektor und der Streuscheibe gebildete Optik verteilt den Lichtstrom zu erkennbaren Lichtsignalen in die geforderten Raumwinkelbereiche. Die Lichtsignale werden als Lichtstärke in Candela gemessen. Die Lichtstärke ist somit ein Maß der Helligkeit der Lichtquelle.

Obwohl schon vorgeschlagen wurde, anstelle der Glühlampen Leuchtdiodenfelder zu verwenden, haben sich Leuchtdioden für Lichtsignalgeber nicht durchgesetzt. Es werden im allgemeinen nach wie vor annähernd auf der ganzen Welt Glühlampen für die Lichtsignalgeber verwendet, obwohl die eingebrachte elektrische Leistung zu der erzeugten Lichtstärke nicht besonders gut ist. Es werden in etwa nur 2 bis 4 %. in Licht umgewandelt, der Rest wird im Wärme umgesetzt. Diese Nachteile, geringe Lichtausbeute und hohe Wärmeentwicklung, versuchte man zu beheben, indem man kleinere Wendelgeometrien in den Glühlampen verwendete. Dadurch konnte aber der Wirkungsgrad nur in geringen Grenzen gesteigert werden. Ein weiterer Nachteil ergibt sich bei den Glühlampen durch die verhältnismäßig geringe Lebensdauer, die im allgemeinen auf 3000 Brennstunden begrenzt ist, wenn die vertretbare Frühausfallrate von weniger als 2 % eingehalten werden soll.

Aufgabe der Erfindung ist es, diese Nachteile zu vermeiden und einen Lichtsignalgeber der eingangs genannten Art so auszugestalten, daß er bei geringerem Stromverbrauch eine auffälligere und bessere Lichtverteilung aufweist.

Diese Aufgabe wird erfindungsgemäß dadurch gelöst, daß die Lampe von einer kompakten Leuchtstofflampe gebildet ist, daß im Gehäuse eine Temperaturkompensationsvorrichtung angeordnet ist, und daß die Leuchtstofflampe im Stand-by-Betrieb geschaltet ist.

Die Verwendung einer kompakten Leuchtstofflampe, beispielsweise einer "DULUX D"-Lampe von OSRAM hat eine Reihe von Vorteilen. Die relativ große Leuchtfläche der Leuchtstofflampe übertrifft bei weitem die Wendelfläche von Hochvoltglühlampen. Daraus ergibt sich eine weitaus bessere, d.h. breitere Lichtverteilung. Im Bereich der Haltelinien ist auch die Naherkennbarkeit wesentlich auffälliger. Ferner ist der Stromverbrauch bei der Leuchtstofflampe wesentlich geringer, ebenso die Wärmeentwicklung. Bei den bisher verwendeten Glühlampen von 54 W mit einem Lichtstrom von 320 lm beträgt das Verhältnis von Lichtstrom zur elektrischen Leistung 69 lm/W. Allein die Verwendung einer kompakten Leuchtstofflampe mit lediglich 13 W und einem Gesamtlichtstrom von 900 lm ergibt ein Verhältnis des Lichtstroms zur elektrischen Leistung von nur 6 lm/W. Dies erbringt eine enorme Stromersparnis und eine wesentlich geringere Wärmeabgabe. Zudem liegt die Lebensdauer einer kompakten Leuchtstofflampe im Vergleich zur Glühlampe um mehr als das Doppelte höher. Das hat den Vorteil, daß die Wartungsintervalle wesentlich größer sein können und damit die Wartungskosten gesenkt werden können. Die Verwendung der kompakten Leuchtstofflampe hat auch den weiteren Vorteil, daß sie eine geringere Spannungsabhängigkeit als Glüh-bzw. Halogenlampen aufweist. Der Lichtstrom sinkt bei der Leuchtstofflampe erheblich weniger ab. Erfindungsgemäß wird die Leuchtstofflampe mit einer Temperaturkompensationseinrichtung und im Stand-by-Betrieb betrieben. Die Temperaturkompensationsvorrichtung ist vorgesehen, weil die Leuchtstofflampe eine Temperaturabhängigkeit aufweist, die sich besonders unterhalb +10° C bemerkbar macht. Bei einem Lichtsignalgeber muß das Lichtsignal sofort erscheinen, wenn es angeschaltet wird, deshalb ist die Leuchtstofflampe zweckmäßigerweise im Stand-by-Betrieb geschaltet, so daß sie sofort beim Einschalten zündet. Zum anderen erhöht dieser Betrieb die Lebensdauer der Leuchtstofflampe wesentlich.

Da der Lichtstrom unterhalb von +10° C absinkt, ist die Temperaturkompensationsvorrichtung so ausgelegt, daß in den unteren Temperaturbereichen von beispielsweise -20° bis +10° C die Temperaturkompensation zur Wirkung kommt. Zweckmäßigerweise kann die Temperaturkompensationsvorrichtung von einem Heizelement gebildet sein, das in Abhängigkeit von der Lampentemperatur geschaltet wird, so daß auch bei niedrigeren Temperaturen ein ausreichender Lichtstrom gewährleistet ist. Dabei kann das Heiz element zwischen den Röhren der Leuchtstofflampe angeordnet sein. Dies hat zum einen den Vorteil, daß durch das Heizelement das emittierte, nach außen strahlende Licht nicht gestört ist, zum anderen unmittelbar an der Leuchtstofflampe sitzt und daher direkt sehr aktiv seine Heizwirkung entfalten kann.

In einer weiteren Ausgestaltung der Erfindung kann das Heizelement, das beispielsweise von einem Kaltleiter gebildet ist, in unmittelbarer Nähe der Leuchtstofflampe auf der Innenseite des Reflektors mit einem Wärmekontaktkleber angeordnet sein. Der Kaltleiter kann auch unmittelbar an der Leuchtstofflampe angeordnet sein.

In einer weiteren Fortbildung der Erfindung kann ein dünnwandiger, transparenter Zylinder über die Leuchtstofflampe angeordnet werden, der auf der Frontseite geschlossen ist. Durch diesen einseitig abgeschlossenen Zylinder erwärmt sich im Betrieb durch die Leistungsaufnahme die Umluft der Leuchtstofflampe und verhindert so ein Absinken des Lichtstroms unterhalb einer Temperatur von +10° C. Zusätzlich kann auf der Innenseite des Zylinders als Heizelement ein Kaltleiter angeordnet sein, so daß auch in den tieferen Temperaturbereichen der Lichtstrom nicht absinkt.

In einer vorteilhaften Ausgestaltung der Erfindung kann der transparente Zylinder in den Farben des Lichtsignalgebers, also entweder in rot, grün oder gelb, gehalten sein, so daß die farbige Streuscheibe entfallen kann und lediglich eine neutrale transparente Streuscheibe vorzusehen ist. Dies hat den Vorteil, daß das Phantomlicht nicht mehr in den auffälligen Signalfarben auftritt, sondern als neutrales weißes Phantomlicht wahrgenommen wird.

In einer zweckmäßigen Weiterbildung der Erfindung ist die Rückseite des Reflektors mit einer Wärmeisolation versehen. Dies ist insbesondere dann vorteilhaft, wenn das Heizelement, beispielsweise der Kaltleiter, auf der Vorderseite des Reflektors angeordnet ist. Damit wird eine Wärmeabstrahlung nach hinten verhindert und die Wärmeentwicklung am Reflektor wird vorwiegend nach vorne in Richtung der Leuchtstofflampe abgegeben, so daß für den Betrieb der Leuchtstofflampe die erforderliche Umgebungsluft-Temperatur vorhanden ist.

Anhand der Zeichnung wird die Erfindung näher erläutert. Es zeigen

Fig. 1 einen Reflektor eines Lichtsignalgebers mit einer kompakten Leuchtstofflampe in seitlichem Schnitt,

Fig. 2 einen Schnitt II-II gemäß Fig.1,

Fig. 3 ein Diagramm des Lichtstrom-Temperaturverhaltens und

Fig. 4 ein Lichtverteilungs-Diagramm.

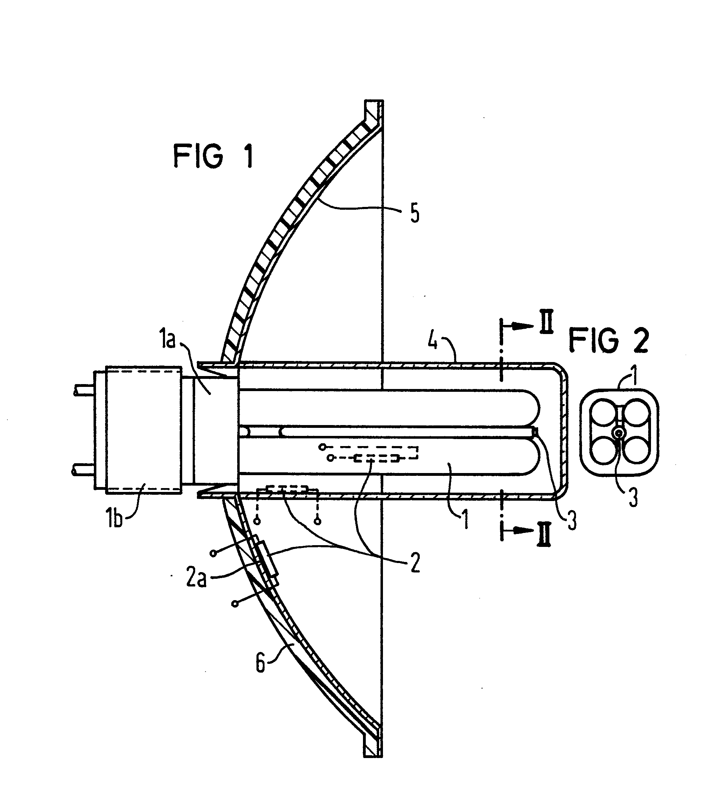

In Fig. 1 ist der Reflektor 5 mit der Leuchtstofflampe 1 dargestellt. Die Leuchtstofflampe 1, die beispielsweise eine DULUX D Lampe von OSRAM mit 13 W elektrischer Leistung sein kann, ist mit ihrem Sockel 1a in der Fassung 1b befestigt. Der Reflektor 5 ist in bekannter Weise in einem Gehäuse eines Lichtsignalgebers angeordnet, das nach vorne die hier nicht gezeigte Streulichtscheibe aufweist. In der Fig.1 sind die verschiedenen Möglichkeiten für eine Temperaturkompensationsanordnung für die Leuchtstofflampe gezeigt.

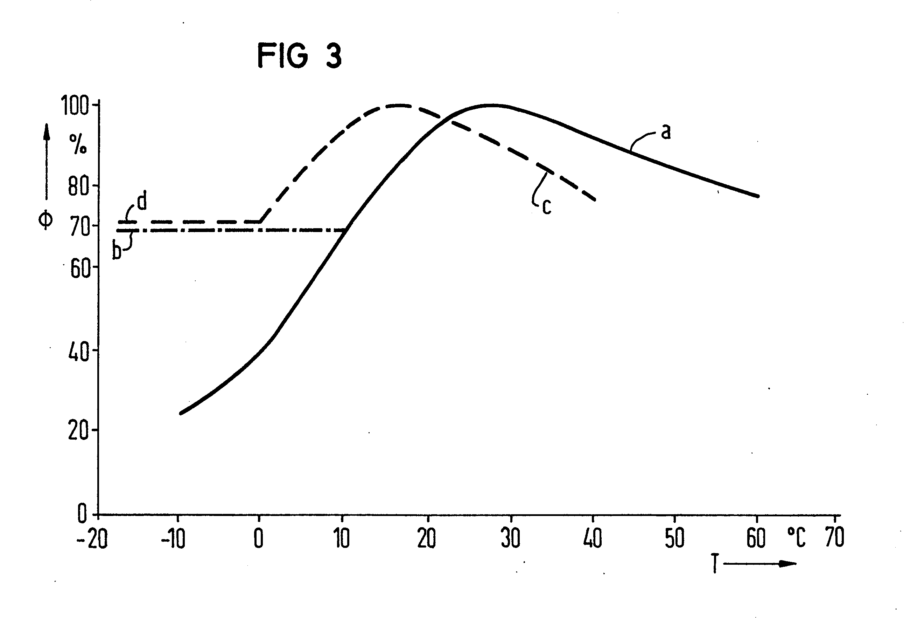

Eine Möglichkeit ist dadurch gegeben, daß über die Leuchtstofflampe 1 ein dünnwandiger, transparenter Zylinder 4 angeordnet ist, der an der Frontseite abgeschlossen ist. Durch diesen einseitig abgeschlossenen Zylinder erwärmt sich im Betrieb durch die Leistungsaufnahme der Leuchtstofflampe die Umluft und verschiebt die Betriebskurve -wie später anhand der Fig.3 noch erläutert wird - nach links. Dies hat zur Folge, daß für einen Betrieb der Lampe unterhalb von 0° C erst eine zusätzliche Maßnahme getroffen werden muß, um den Lichtstrom der Leuchtstofflampe nicht unter einen bestimmten Wert absinken zu lassen. Diese zusätzliche Maßnahme kann dadurch erreicht werden, daß als Heizelement ein Kaltleiter an der Innenseite des Zylinders 4 angeordnet wird. Ein Kaltleiter kann auch auf der Innenseite des Reflektors 5 in der Nähe der Leuchtstofflampe 1 angeordnet sein. Die Kaltleiter sind jeweils mit "2" bezeichnet. Dabei wird der Kaltleiter zweckmäßigerweise mit einem Wärmekontaktkleber 2a auf der entsprechenden Unterlage, Reflektor 5 oder Innenwand des Zylinders 4, geklebt. Der relativ kleine Kaltleiter verursacht weder auf dem Zylinder 4 eine bedeutende Strahlungsverminderung der Leuchtstofflampe 1 noch verursacht er eine störende Dunkelzone bei der Ausleuchtung des Lichtsignalgebers, wenn er auf den Reflektor angeordnet ist.

In einer Weiterbildung der Erfindung kann der transparente, dünnwandige Zylinder in einer der Farben rot, gelb oder grün gefärbt sein. In diesem Fall kann die farbige Streuscheibe durch eine neutrale weiße Streuscheibe ersetzt werden. Die weißen Streuscheiben spiegeln im Gegensatz zu den farbigen Streuscheiben nur neutrales weißes Phantomlicht wider, welches nicht als verkehrsgefährdend angesehen wird. Eine andere Maßnahme zur Temperaturkompensation ist ebenfalls in Fig.1 gezeigt. Das temperaturabhängig zu - schaltende Heizelement 3 ist in der Mitte zwischen den Röhren der Leuchtstofflampe 1 angeordnet. Dies ist noch deutlicher gezeigt in der Fig.2, die einen Schnitt gemäß der Figur 1 mit II-II gekennzeichnet darstellt. Die vier Röhren der Leuchtstofflampe erscheinen hier als vier einzelne Röhren, sie sind jedoch durch wiederholtes Abwinkeln von einem einzigen Rohr gebildet. Ein Heizelement läßt sich auch in Form eines Kaltleiters 2 unmittelbar auf der Röhre der Leuchtstofflampe 1 aufbringen, wie dies ebenfalls in Fig.1 angedeutet ist.

Damit die Wärmeabgabe des Reflektors 5 vorwiegend nach vorne in Richtung der Leuchtstofflampe 1 erfolgt, ist die Rückseite des Reflektors zusätzlich mit einer wärmeisolierenden Schicht 6 versehen.

Es ist auch möglich, einen der im Bereich der Leuchtstofflampe angeordneten Kaltleiter nicht als Kaltleiterheizung vorzusehen, sondern als Temperaturfühler in die Regelungsschaltung der Leuchtstofflampe einzuschalten, so daß das Heizelement 3 in Abhängigkeit der Umgebungstemperatur entsprechend geschaltet wird.

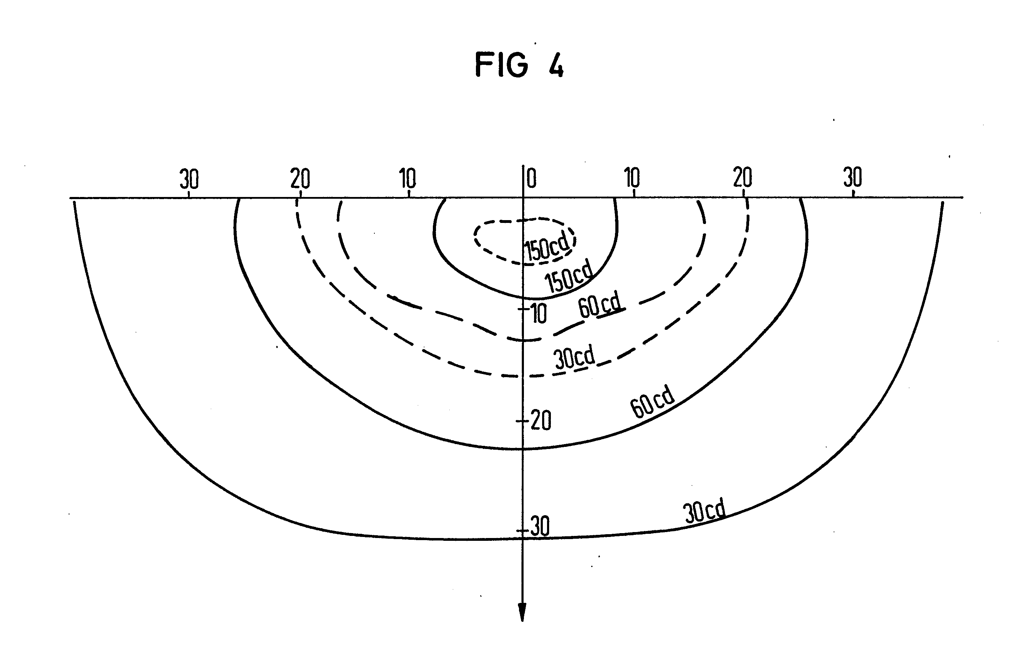

In Fig.3 ist das Lichtstrom-Temperaturverhalten der Leuchtstofflampe dargestellt, die in Abhängigkeit der Umgebungstemperatur T der Lampe einen unterschiedlichen Lichtstrom Φ -in Prozent gezeigt -bewirkt. Die Kurve, mit "a" bezeichnet, zeigt das Temperaturverhalten ohne Temperaturkompensationsvorrichtung. Die gestrichelte Kurve c zeigt das Temperaturverhalten des Lichtstroms mit dem übergestülpten Zylinder. Der Lichtstrom der Leuchtstofflampe sinkt im Normalfall bei einer Umgebungstemperatur von weniger als +10° C unter 70 % ab, siehe Kurve a. Mit dem übergestülpten Zylinder wird diese Kurve verschoben, so daß ein Absinken unter 70 % unterhalb von 0° C erreicht wird. In diesem Fall sind noch weitere Temperaturkompensationsmaßnahmen zu treffen, um ein Absinken des Lichtstroms unter 70 % zu verhindern, beispielsweise durch die Verwendung von Kaltleitern im Leuchtstofflampenbereich als Heizelement. Dies ist mit der gestrichelten Kurve d gezeigt. Auch ohne den Zylinder läßt sich eine Temperaturkompensation erreichen, wenn das Absinken des Lichtstroms unter 70 % unterhalb von +10° C verhindert werden soll, indem mit einem Heizelement, wie in Fig.1 gezeigt, Umgebungsluft entsprechend erwärmt wird. Dies ist mit der Kurve b gezeigt. Die temperaturkompensierte Leuchtstofflampe zeigt dann einen Kurvenverlauf b bei etwa 70 % des Lichtstroms bis zu einer Temperatur von + 10° C und dann den normalen Kurvenverlauf a, der bis auf 100 % bei annähernd 30° C ansteigt und dann langsam wieder abfällt und etwa bei 70° C Umgebungsluft wieder auf einen Lichtstrom von 70 % absinkt. Mit einer der erfindungsgemäß getroffenen Temperaturkompensation arbeitet die Leuchtstofflampe in einem Temperaturbereich von -20° bis +70° C, ohne dabei ein Absinken des Lichtstroms unter 70 % zu erreichen. Bei einem Lichtstrom von 70 % ist bei Verwendung der Leuchtstofflampe in einem Lichtsignalgeber eine ausreichende und gut erkennbare Lichtstärke für ein zuverlässiges Wahrnehmen gegeben. Die Leuchtdichteverteilung eines Signalgebers mit einer temperaturkompensierten Leuchtstofflampe ist bei weitem besser und breiter als bei der Verwendung einer Glühlampe in einem Lichtsignalgeber. Dies ist in der Fig.4 gezeigt.

Die Fig. 4 zeigt die Lichtverteilung in Abhängigkeit vom Raumwinkel für verschiedene Lichtstärken. Dabei ist die Lichtverteilung der im allgemeinen verwendeten Glühlampe mit einer elektrischen Leistung von 54 W und 320 lm gestrichelt, bei Verwendung einer temperaturkompensierten Leuchtstofflampe von 13 W mit 900 lm mit einer durchgezogenen Linie für verschiedene Lichtstärken gezeigt, nämlich für eine Lichtstärke von 150, 60 und 30 Candela. Man sieht hier deutlich den enormen Vorteil für Lichtsignalgeber bei einer Verwendung von temperaturkompensierten kompakten Leuchtstofflampen anstelle der bisherigen Glühlampen. Die Wirksamkeit des Kaltleiters als Heizelement läßt sich auch dadurch noch steigern, wenn der Kaltleiter direkt in der Röhre der Leuchtstofflampe eingebaut ist. Seine Verlustwärme wird direkt in die Röhre abgestrahlt. Gleichzeitig verringern sich Reaktionszeit und Verlustleistung des Kaltleiters. Die bei tieferen Temperaturen notwendige Heizleistung ist relativ gering und gegenüber den Wärmeverlusten einer Glühlampe nahezu vernachlässigbar. Außerdem trägt die im Stand-by-Betrieb auftretende Verlustleistung von einigen Watt zusätzlich zur Umluftvorheizung bei und verbessert somit die Temperaturcharakteristik der Leuchtstofflampe, so daß eine relativ geringe zusätzliche Heizleistung seitens der Heizelemente notwendig ist.

Bezugszeichenliste

    1 Leuchtstofflampe
    1a, 1b Fassung
    2 Kaltleiter
    2a Wärmekontakt-Kleber
    3 Heizelement
    4 Zylinder
    5 Reflektor
    6 wärmeisolierende Schicht

**Ansprüche**

1. Lichtsignalgeber, der zumindest aus einer Einzelkammer gebildet ist, die in einem Gehäuse einen Reflektor, eine Lampe und eine Streuscheibe aufweist, **dadurch gekennzeichnet,** daß die Lampe von einer kompakten Leuchtstofflampe (1) gebildet ist, daß im Gehäuse eine Temperaturkompensationsvorrichtung angeordnet ist, und daß die Leuchtstofflampe in Stand-by-Betrieb geschaltet ist.

2. Lichtsignalgeber nach Anspruch 1,

**dadurch gekennzeichnet**, daß die Temperaturkompensationsvorrichtung von einem Heizelement (2 bzw. 3) gebildet ist, das in Abhängigkeit von der Umgebungstemperatur der Lampe geschaltet ist.

3. Lichtsignalgeber nach Anspruch 1 oder 2,

**dadurch gekennzeichnet**, daß über der Leuchtstofflampe (1) ein transparenter Zylinder (4) angeordnet ist, der auf der Frontseite geschlossen ist.

4. Lichtsignalgeber nach Anspruch 2 oder 3,

**dadurch gekennzeichnet**, daß das Heizelement - (3) zwischen den Röhren der Leuchtstofflampe (1) angeordnet ist.

5. Lichtsignalgeber nach einem der vorhergehenden Ansprüche, **dadurch gekennzeichnet**, daß das Heizelement von einem Kaltleiter gebildet ist.

6. Lichtsignalgeber nach Anspruch 5,

**dadurch gekennzeichnet**, daß der Kaltleiter (2) auf der Vorderseite des Reflektors (5) in der Nähe der Leuchtstofflampe (1) angeordnet ist.

7. Lichtsignalgeber nach Anspruch 3 oder 6,

**dadurch gekennzeichnet**, daß der Kaltleiter (2) auf der Innenseite des Zylinders (4) angeordnet ist.

8. Lichtsignalgeber nach Anspruch 6,

**dadurch gekennzeichnet**, daß der Kaltleiter (2) unmittelbar auf der Leuchtstofflampe (1) angeordnet ist.

9. Lichtsignalgeber nach Anspruch 3,

**dadurch gekennzeichnet**, daß der transparente Zylinder (4) farblos oder in einer der Signalgeberfarben (rot/gelb/grün) gehalten ist.

10. Lichtsignalgeber nach einem der vorhergehenden Ansprüche, **dadurch gekennzeichnet**, daß auf der Rückseite des Reflektors (5) eine wärmeisolierende Schicht (6) angeordnet ist.

FIG 1

FIG 2

FIG 3

0 213 560

# FIG 4

0 213 560

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | DE-A-1 539 353 (AGFA) <br> * Insgesamt * | 1-3 | F 21 Q 3/00 <br> H 01 J 61/52 |
| A | US-A-2 581 959 (KOEHLER) <br> * Spalte 1, Zeilen 22-28 * | 1,2 | |
| A | US-A-2 765 416 (BEESE) <br> * Figur 1 * | 1-4 | |
| A | FR-A-2 255 705 (XEROX) <br><br> * Seite 3, Zeilen 25-96; Figuren 1-5 * | 1,2,5 8 | |
| A | US-A-3 961 222 (GALLO) <br><br> * Insgesamt * | 1-3 5 8 | RECHERCHIERTE SACHGEBIETE (Int. Cl.4) |
| A | DE-U-8 511 419 (KELLER) <br> * Seite 6, Zeile 15 * | 9 | F 21 Q <br> H 01 J <br> F 21 V |
| A | US-A-4 104 713 (CHAN) <br> * Figur 1 * | 10 | |

Der vorliegende Recherchenbericht wurde für alle Patentansprüche erstellt.

| Recherchenort | Abschlußdatum der Recherche | Prüfer |
|---|---|---|
| DEN HAAG | 11-11-1986 | FOUCRAY R.B.F. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82